# EUROPEAN PATENT SPECIFICATION

(11) **EP 3 063 310 B1**
(45) Date of publication and mention of the grant of the patent: **08.04.2020**
(21) Application number: 13896801.1
(22) Date of filing: 31.10.2013
(51) Int. Cl.: C23C 26/00, C23C 28/00, C25D 11/12, C25D 11/04, C25D 11/02, C25D 11/06, C25D 11/10, C25D 11/16, C25D 11/18, C25D 11/20, C25D 11/24, C25D 11/26, C25D 11/30

(54) **METHOD OF TREATING METAL SURFACES**
VERFAHREN ZUR BEHANDLUNG VON METALLOBERFLÄCHEN
PROCÉDÉ DE TRAITEMENT DE SURFACES MÉTALLIQUES

(43) Date of publication of application: 07.09.2016
(73) Proprietor: Hewlett-Packard Development Company, L.P., Spring TX 77389 (US)
(72) Inventor: KANG, Yu-Chuan, Taipei 11568 (TW); WU, Kuan-Ting, Taipei 11568 (TW)
(74) Representative: Stöckeler, Ferdinand
(86) International application number: PCT/US2013/067706
(87) International publication number: WO 2015/065416

(56) References cited:
- CN-A- 101 413 122
- US-A- 4 094 749
- US-A1- 2005 178 664
- US-A1- 2009 255 824
- US-A1- 2009 258 246
- US-A1- 2010 051 467
- US-A1- 2010 112 297
- US-A1- 2010 112 297
- US-A1- 2012 251 839

## Description

### Background

Devices such as mobile phones, tablets and portable (e.g. laptop or palm) computers are generally provided with a casing. The casing typically provides a number of functional features, e.g. protecting the device from damage.

Increasingly, consumers are also interested in the aesthetic properties of the casing such as the look, colour and style. In addition, devices such as mobile phones, tablets and portable computers are typically designed for hand held functionality, thus the consumer may also consider the weight of the device and the feel of the casing by which they hold the device.

The prior art describes, for example, within the US 2010/0051467 A1 a surface treating of aluminium and aluminium alloy, but just for one layer. The document US 2010/0112297 A1 describes that magnesium and magnesium alloy may be coated by use of a single coating process.

### Brief Description of Drawings

By way of non-limiting examples, device casings and processes of manufacturing such casings according to the present disclosure will be described with reference to the following drawings in which
Figure 1 is a flow diagram illustrating an example of a method of treating a metal surface
Figure 2 is a flow diagram illustrating another example of a method of treating a metal surface
Figure 3A is a sectional top view of an example of a treated metal surface having two metal oxide coatings produced by the method of Figure 1 or Figure 2
Figure 3B is a sectional side view of the treated metal surface of Figure 3a along the line 3-3
Figure 4A is a sectional top view of an example of a treated metal surface having three metal oxide coatings produced by the method of Figure 1 or Figure 2
Figure 4B is a sectional side view of the treated metal surface of Figure 4a along the line 4-4
Figures 5A-5C are sectional side views of examples of treated metal surfaces produced by the method of Figure 1 or Figure 2
Figure 6A is a perspective view of an example of a casing produced by the method of Figure 1 or Figure 2
Figure 6B is a sectional perspective view of the casing of Figure 6a

### Detailed Description

The present disclosure describes a method of treating a metal surface, for example a casing for a device. The method comprises the formation of a first metal oxide coating to cover the metal surface through an electrochemical treatment of the metal surface. Portions of the first metal oxide coating are then removed, for example using chemical or laser etching, to expose portions of the underlying metal surface. This exposed metal surface is then treated electrochemically to form a second metal oxide coating at the site of the exposed metal.

The relatively high voltages used by the disclosed method results in the formation of comparatively thick metal oxide coatings in less time when compared to other oxidation methods. This results in a higher throughput of casings in manufacturing settings.

Furthermore, the disclosed method provides for improved environmental, health and safety factors, requiring less toxic and environmentally harmful electrolytic solutions, and by providing a safer method for treating volatile metals such as magnesium and its alloys.

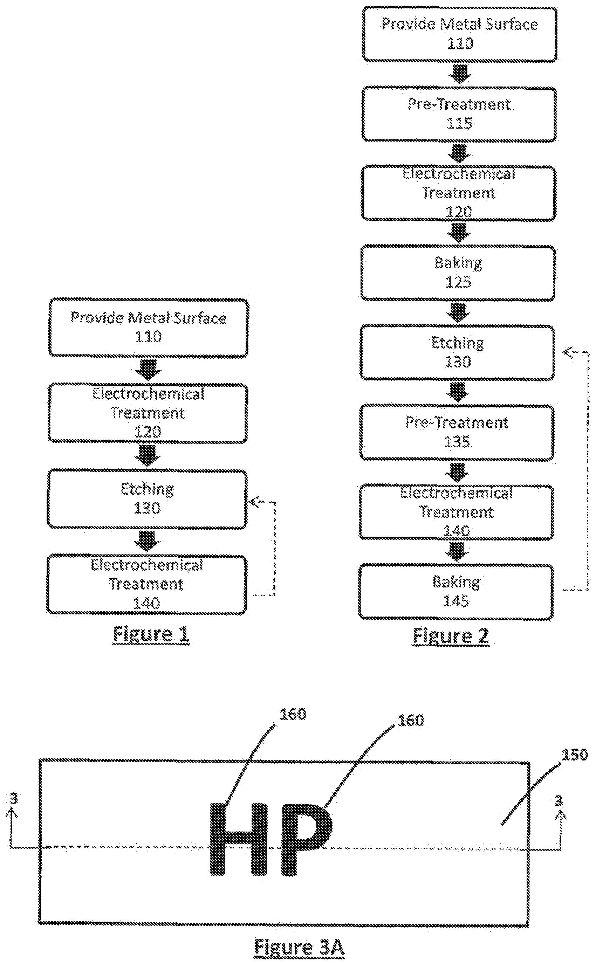

Figures 1 and 2 illustrate examples of methods of manufacturing a casing.

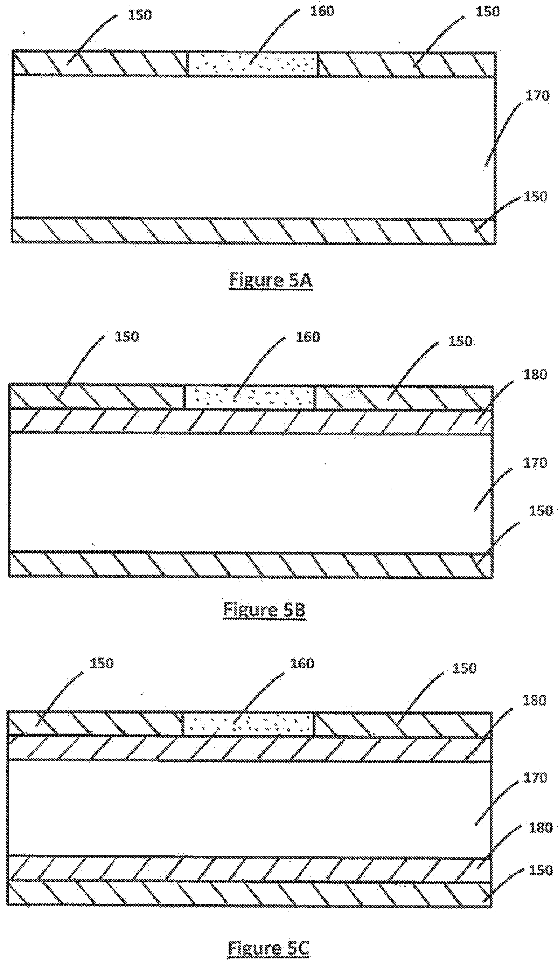

Referring to Figure 1, a metal surface is provided (110). The metal surface may be, for example, in the form of a casing for a device. The casing can be formed using conventional methods, such as stamping or moulding, into the desired shape of the finished product. In one example, the casing is formed of a single layer of metal, typically a light metal such as aluminium, magnesium, titanium or alloys thereof, resulting in a product such as that shown in Figure 5A. In another example, the casing may be formed of two or more layers of a combination of metals, resulting in products such as those shown in Figures 5B and 5C.

The metal surface is electrochemically treated (120) to form a first metal oxide coating. Depending on the conditions of the electrochemical treatment and the metal being treated, the disclosed method can be used and may vary to form metal oxide coatings of 1-300 µm in thickness and more preferably 3-50µ in thickness. In comparison, metal oxide coatings formed by other techniques are typically in the range of 0.001-0.1 µm.

Referring to Figure 1, after electrochemically treating the metal surface (120), portions of the first metal oxide coating are removed (130), for example by chemical or laser etching, exposing underlying portions of the metal surface. These exposed portions of the underlying metal undergo a further electrochemical treatment (140) thereby forming a second oxide coating. This second metal oxide coating may fill in the areas of the first metal oxide's coating that were removed, providing a continuous metal oxide coating on the metal surface formed of two different metal oxide materials.

As shown in Figure 1, the oxide removal (etching) (130) and electrochemical treatment (140) may be repeated numerous times to achieve the desired number of metal oxide coatings on the surface of the metal.

The electrochemical treatment includes applying a voltage greater than the oxide coating's dielectric breakdown potential to the metal surface in an electrolytic solution.

The dielectric breakdown potential of a material is the voltage applied via an electric field that the material can withstand without breaking down. When a material such as a metal oxide is treated with a potential greater than its dielectric breakdown potential, the breakdown results in a disruptive discharge through the metal.

The dielectric breakdown potential of a material varies depending on a number of factors, for example the composition, thickness and temperature of the material.

An example of a suitable electrochemical process includes micro-arc oxidation (also known as plasma electrolytic oxidation). Micro-arc oxidation is an electrochemical surface treatment process for generating oxide coatings on metals.

In one example of micro-arc oxidation, a metal is immersed in a bath of electrolyte, typically an alkali solution such as potassium hydroxide. The casing is electrically connected so as to become one of the electrodes in the electrochemical cell, with the wall of the bath, typically formed of an inert material such as stainless steel, acting as the counter-electrode. A potential is applied between the two electrodes, which may be continuous or pulsing, and direct current or alternating current.

Other electrochemical treatments include anodising. In anodising, a reduced voltage is used such that the disruptive discharges observed in micro-arc oxidation do not occur. As a result, the electrolytic solutions used in anodising are typically corrosive acid solutions which act to form pores through the forming oxide coating to the metal surface, allowing the oxide coating to continue growing. The use of these corrosive acids can add complexities to the manufacturing process with the increased requirements of using, handling and disposing of the chemicals as compared to the safer and less toxic alkali solutions of the micro-arc oxidation process.

As potentials used in micro-arc oxidation are greater than the dielectric breakdown potential of the forming metal oxide coating, disruptive discharges occur and the resulting high temperature, high pressure plasma modifies the structure of the oxide coating. This results in an oxide coating that is porous and with the oxide in a substantially crystalline form.

In addition, oxide coatings formed in the above manner are conversion coatings, converting the existing metal material into the oxide coating. This conversion of the metal provides a good adhesion of the oxide coating to the metal relative to oxide coatings deposited on the metal surface as occurs using other methods.

Properties of the oxide coating such as porosity, hardness, colour, conductivity, wear resistance, toughness, corrosion resistance, thickness and adherence to the metal surface can be varied by varying the parameters of the electrochemical treatment. Such parameters include the electrolyte (e.g. temperature and composition), the potential (e.g. pulse or continuous, direct current or alternating current, frequency, duration and voltage) and the processing time.

In one example, the resulting colour of a titanium dioxide coating can be varied by varying the voltage applied. In another example, organic acid can be added to the electrolyte to allow for thicker oxide coatings to be formed.

Referring to Figure 2, after electrochemical treatment the oxidised metal surface may undergo baking (125, 145), for example to remove any remaining electrolytic solution. Furthermore, the metal surface and/or metal oxide may be pre-treated (115, 135) prior to micro-arc oxidation.

Pre-treatment (115, 135) of the metal surface and/or metal oxide coating can be used to alter the visual, tactual and textural properties of the casing, or to otherwise prepare the casing for the electrochemical process. Examples of pre-treatment processes relating to the visual, tactual and textural properties of the casing include: dyeing, painting, spray coating, sputter coating, electrophoretic deposition, nano-coating, chemical vapour deposition and physical vapour deposition. Examples of pre-treatment processes relating to preparing the casing for the electrochemical process include: degreasing, cleaning, buffing or polishing.

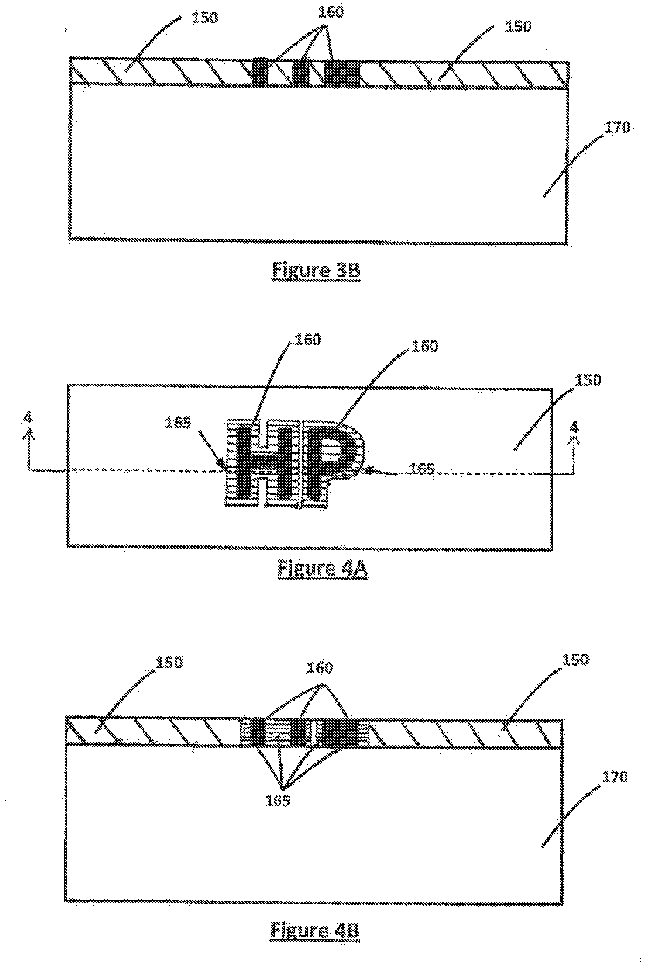

Figures 3A and 3B show an example of a metal surface treated according to the method shown in Figure 1 or 2. As shown in the example of Figure 3B, the etching (130) and subsequent electrochemical treatment (140) allow for the two oxide coatings (150, 160) to form distinct patterns on the surface of the casing, in this example the letters "HP". In addition to letters and numbers, the process of Figures 1 and 2 could be used, for example, to produce patterns and pictures. By repeating the etching and electrochemical treatments a number of different metal oxide coatings can be formed, the different metal oxide coatings having different functional, physical, visual, tactual and textual properties.

Figures 4A and 4B show the treated metal surface of Figures 3A and 3B having undergone an additional etching and electrochemical treatment to form a third oxide coating (165), in this example outlining the "HP" lettering shown in Figure 3A.

Figures 5A-5C show examples of a metal surface coated by a method as shown in Figures 1 or 2. The coated product shows a number of layers (not to scale): a first metal layer (170), first and second metal oxide coatings (150, 160) on the metal surface and, in the examples shown in Figures 5B and 5C, a second metal component (180).

In the examples shown in 5B and 5C, the presence of the second metal component (180) can protect the first metal layer (170) from undergoing repeated electrochemical treatments. The presence of a second metal layer may be used, for example, when the first metal (170) has desired properties for the casing (e.g. strength, low weight) however another metal (e.g. 180) is more suited to the electrochemical process or provides an oxide coating with preferred properties (e.g. colour, conductivity, hardness etc).

For example magnesium and its alloys are easily corroded and form potentially explosive hydrogen gas as a by-product of its reaction with water. Magnesium also reacts exothermically with acids, making processes such as anodisation, where corrosive acids are used as the electrolyte, a potentially hazardous treatment for magnesium and its alloys. However, magnesium and its alloys have many physical properties suitable for use in casings, such as their strength and light weight. The disclosed method allows for a relatively safer method of treating and utilising magnesium and its alloys in casings and the like.

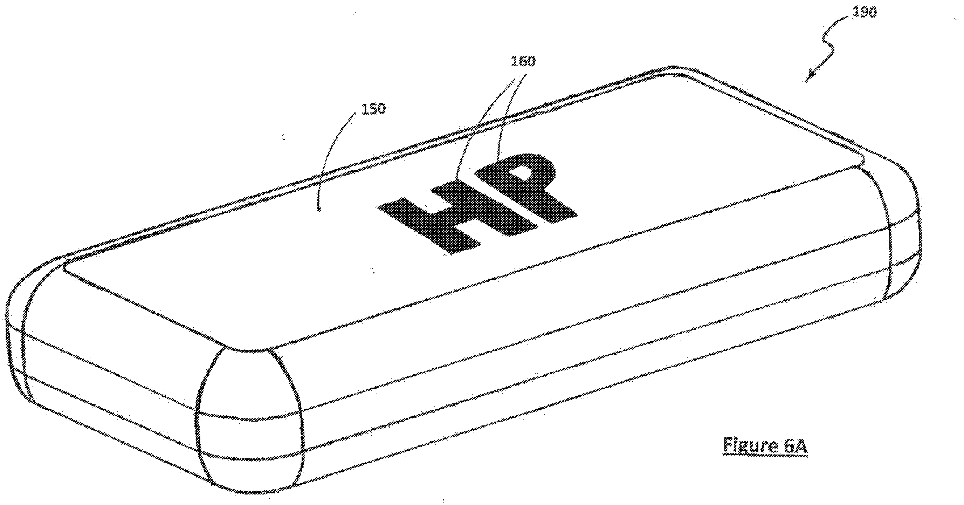

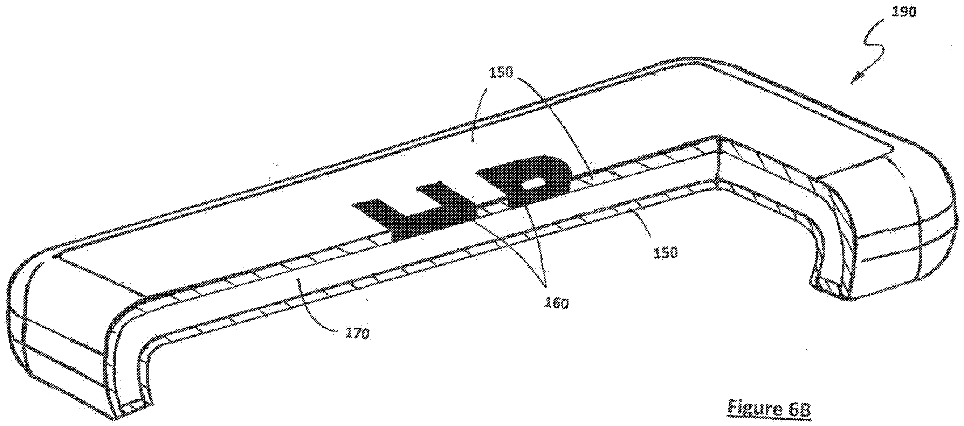

Figures 6A and 6B provide an example of a casing (190) for a smart phone coated by the method described herein. Referring to Figure 6B, the casing has a first metal layer (170), a first metal oxide coating (150) on the metal surface and a second metal oxide coating (160) on the metal surface depicting the letters "HP".

It will be appreciated that numerous variations and/or modifications may be made to the above-described examples, without departing from the broad general scope of the present disclosure. The present examples are, therefore, to be considered in all respects as illustrative and not restrictive.

## Claims

1. A method of treating a metal surface, the method comprising
forming a second metal layer (180) on a first metal layer (170);
treating the second metal layer (180) with micro-arc oxidation to form a first metal oxide coating (150) on metal surface of the second metal layer (180),
removing a portion of the first metal oxide coating (150) to form an exposed metal surface of the second metal layer (180), and
treating the exposed metal surface with micro-arc oxidation to form a second metal oxide coating (160) on the exposed metal surface.

2. A method according to claim 1, wherein the first metal layer (170) comprises magnesium and its alloys, wherein the second layer comprises another metal.

3. A method according to claim 1, wherein removing portions of the metal oxide coating comprises etching.

4. A method according to claim 3, wherein etching is chemical etching or laser etching.

5. A method according to claim 1, comprising removing portions of the first metal oxide coating (150) and/or the second metal oxide coating (160) to form a further exposed metal surface and treating the further exposed metal surface with micro-arc oxidation to form a third metal oxide coating on the further exposed metal surface.

6. A method according to claim 1, further comprising baking the metal surface with the first metal oxide coating (150).

7. A method according to claim 1, further comprising pre-treating the metal surface and/or the first metal oxide coating (150) prior to treating with micro-arc oxidation.

8. A method according to claim 1, wherein the treating the second metal layer (180) is performed electrochemically to form a first metal oxide coating (150) having a dielectric breakdown potential, the electrochemical treatment comprising applying a first voltage to the metal surface in a first electrolytic solution, wherein the voltage applied is greater than the dielectric breakdown potential of the first metal oxide coating (150),
, and
wherein the treating the exposed metal is performed electrochemically treating the exposed metal to form a second metal oxide coating (160) having a dielectric breakdown potential, the electrochemical treatment comprising applying the first or a second voltage to the exposed metal surface in the first or a second electrolytic solution, wherein the voltage applied is greater than the dielectric breakdown potential of the second metal oxide coating (160).

9. A method according to claim 8, wherein the electrolytic solutions comprise dilute alkali solutions.

10. A method according to claim 8, wherein the electrolytic solutions further comprise an organic acid.

11. A method according to claim 8, wherein the first and/or the second voltage is a pulsed direct current.

12. A method according to claim 1, wherein the metal surface of the first layer belongs to a casing.

13. A casing for a portable device comprising
a metal surface,
a second metal layer (180) formed on a first metal layer (170) of the casing,
a first metal oxide coating (150) of the metal surface formed by micro-arc oxidation of the metal surface of the second metal layer (180), and
a second metal oxide coating (160) formed by micro-arc oxidation of the metal surface of the second metal layer (180).

14. A casing according to claim 13, wherein the first metal oxide coating (150) and the second metal oxide coating (160) form a continuous coating of the metal surface.

15. A casing according to claim 14 wherein the first metal oxide coating (150) and the second metal oxide coating (160) have different functional, physical, visual, tactual and/or textual properties.

## Patentansprüche

1. Verfahren zum Behandeln einer Metalloberfläche, wobei das Verfahren umfasst Ausbilden einer zweiten Metallschicht (180) auf einer ersten Metallschicht (170);
Behandeln der zweiten Metallschicht (180) mit Micro-arc-Oxidation, um eine erste Metalloxidbeschichtung (150) auf der Metalloberfläche der zweiten Metallschicht (180) zu bilden,
Entfernen eines Teils der ersten Metalloxidbeschichtung (150), um eine freigelegte Metalloberfläche der zweiten Metallschicht (180) zu bilden, und
Behandeln der freigelegten Metalloberfläche mit Micro-arc-Oxidation, um eine zweite Metalloxidbeschichtung (160) auf der freigelegten Metalloberfläche zu bilden.

2. Verfahren nach Anspruch 1, wobei die erste Metallschicht (170) Magnesium und Legierungen davon umfasst, wobei die zweite Schicht ein anderes Metall umfasst.

3. Verfahren nach Anspruch 1, wobei das Entfernen von Teilen der Metalloxidbeschichtung Ätzen umfasst.

4. Verfahren nach Anspruch 3, wobei das Ätzen chemisches Ätzen oder Laserätzen ist.

5. Verfahren nach Anspruch 1, das das Entfernen von Teilen der ersten Metalloxidbeschichtung (150) und/oder der zweiten Metalloxidbeschichtung (160), um eine weitere freigelegte Metalloberfläche zu bilden, und das Behandeln der weiteren freigelegten Metalloberfläche mit Micro-arc-Oxidation, um eine dritte Metalloxidbeschichtung auf der weiteren freigelegten Metalloberfläche zu bilden, umfasst.

6. Verfahren nach Anspruch 1, das ferner das Brennen der Metalloberfläche mit der ersten Metalloxidbeschichtung (150) umfasst.

7. Verfahren nach Anspruch 1, das ferner das Vorbehandeln der Metalloberfläche und/oder der ersten Metalloxidbeschichtung (150) vor Behandlung mit Micro-arc-Oxidation umfasst.

8. Verfahren nach Anspruch 1, wobei das Behandeln der zweiten Metallschicht (180) elektrochemisch durchgeführt wird, um eine erste Metalloxidbeschichtung (150) mit einem dielektrischen Durchschlagspotential zu bilden, wobei das elektrochemische Behandeln das Anlegen einer ersten Spannung an die Metalloberfläche in einer ersten Elektrolytlösung umfasst, wobei die angelegte Spannung größer als das dielektrische Durchschlagspotential der ersten Metalloxidbeschichtung (150) ist, und
wobei das Behandeln des freigelegten Metalls elektrochemisch durchgeführt wird, wobei das freigelegte Metall behandelt wird, um eine zweite Metalloxidbeschichtung (160) mit einem dielektrischen Durchschlagspotential zu bilden, wobei das elektrochemische Behandeln das Anlegen der ersten oder einer zweiten Spannung an die freigelegte Metalloberfläche in der ersten oder in einer zweiten Elektrolytlösung umfasst, wobei die angelegte Spannung größer als das dielektrische Durchschlagspotential der zweiten Metalloxidbeschichtung (160) ist.

9. Verfahren nach Anspruch 8, wobei die Elektrolytlösungen verdünnte Alkalilösungen umfassen.

10. Verfahren nach Anspruch 8, wobei die Elektrolytlösungen ferner eine organische Säure umfassen.

11. Verfahren nach Anspruch 8, wobei die erste und/oder die zweite Spannung ein gepulster Gleichstrom ist.

12. Verfahren nach Anspruch 1, wobei die Metalloberfläche der ersten Schicht zu einem Gehäuse gehört.

13. Gehäuse für ein tragbares Gerät, das Folgendes umfasst:
eine Metalloberfläche,
eine zweite Metallschicht (180), die auf einer ersten Metallschicht (170) des Gehäuses ausgebildet ist,
eine erste Metalloxidbeschichtung (150) der Metalloberfläche, die durch Micro-arc-Oxidation der Metalloberfläche der zweiten Metallschicht (180) gebildet ist, und
eine zweite Metalloxidbeschichtung (160), die durch Micro-arc-Oxidation der Metalloberfläche der zweiten Metallschicht (180) gebildet ist.

14. Gehäuse nach Anspruch 13, wobei die erste Metalloxidbeschichtung (150) und die zweite Metalloxidbeschichtung (160) eine durchgehende Beschichtung der Metalloberfläche bilden.

15. Gehäuse nach Anspruch 14, wobei die erste Metalloxidbeschichtung (150) und die zweite Metalloxidbeschichtung (160) unterschiedliche funktionelle, physikalische, optische, taktile und/oder Textureigenschaften aufweisen.

## Revendications

1. Procédé de traitement d'une surface métallique, le procédé comprenant
la formation d'une seconde couche métallique (180) sur une première couche métallique (170) ;
le traitement de la seconde couche métallique (180) par oxydation micro-arc pour former un premier revêtement d'oxyde métallique (150) sur la surface métallique de la seconde couche métallique (180),
l'élimination d'une partie du premier revêtement d'oxyde métallique (150) pour former une surface métallique exposée de la seconde couche métallique (180), et
le traitement de la surface métallique exposée par oxydation micro-arc pour former un deuxième revêtement d'oxyde métallique (160) sur la surface métallique exposée.

2. Procédé selon la revendication 1, dans lequel la première couche métallique (170) comprend du magnésium et ses alliages, la seconde couche comprenant un autre métal.

3. Procédé selon la revendication 1, dans lequel l'élimination de parties du revêtement d'oxyde métallique comprend une gravure.

4. Procédé selon la revendication 3, dans lequel la gravure est une gravure chimique ou gravure au laser.

5. Procédé selon la revendication 1, comprenant l'élimination de parties du premier revêtement d'oxyde métallique (150) et/ou du deuxième revêtement d'oxyde métallique (160) pour former une autre surface métallique exposée et le traitement de la surface métallique davantage exposée par oxydation micro-arc pour former un troisième revêtement d'oxyde métallique sur la surface métallique davantage exposée.

6. Procédé selon la revendication 1, comprenant en outre la cuisson de la surface métallique avec le premier revêtement d'oxyde métallique (150).

7. Procédé selon la revendication 1, comprenant en outre le prétraitement de la surface métallique et/ou du premier revêtement d'oxyde métallique (150) avant le traitement par oxydation micro-arc.

8. Procédé selon la revendication 1, dans lequel le traitement de la seconde couche métallique (180) est effectué électrochimiquement pour former un premier revêtement d'oxyde métallique (150) ayant un potentiel de rupture diélectrique, le traitement électrochimique comprenant l'application d'une première tension à la surface métallique dans une première solution électrolytique, la tension appliquée étant supérieure au potentiel de rupture diélectrique du premier revêtement d'oxyde métallique (150),
et
dans lequel le traitement du métal exposé est effectué par traitement électrochimique du métal exposé pour former un deuxième revêtement d'oxyde métallique (160) ayant un potentiel de rupture diélectrique, le traitement électrochimique comprenant l'application de la première ou d'une seconde tension à la surface métallique exposée dans la première ou une seconde solution électrolytique, la tension appliquée étant supérieure au potentiel de rupture diélectrique du deuxième revêtement d'oxyde métallique (160).

9. Procédé selon la revendication 8, dans lequel les solutions électrolytiques comprennent des solutions alcalines diluées.

10. Procédé selon la revendication 8, dans lequel les solutions électrolytiques comprennent en outre un acide organique.

11. Procédé selon la revendication 8, dans lequel la première et/ou la seconde tension est un courant continu pulsé.

12. Procédé selon la revendication 1, dans lequel la surface métallique de la première couche appartient à un boîtier.

13. Boîtier pour appareil portable comprenant
une surface métallique,
une seconde couche métallique (180) formée sur une première couche métallique (170) du boîtier,
un premier revêtement d'oxyde métallique (150) de la surface métallique formé par oxydation micro-arc de la surface métallique de la seconde couche métallique (180), et
un deuxième revêtement d'oxyde métallique (160) formé par oxydation micro-arc de la surface métallique de la seconde couche métallique (180).

14. Boîtier selon la revendication 13, dans lequel le premier revêtement d'oxyde métallique (150) et le deuxième revêtement d'oxyde métallique (160) forment un revêtement continu de la surface métallique.

15. Boîtier selon la revendication 14, dans lequel le premier revêtement d'oxyde métallique (150) et le deuxième revêtement d'oxyde métallique (160) ont des propriétés fonctionnelles, physiques, visuelles, tactiles et/ou textuelles différentes.
